# EUROPEAN PATENT APPLICATION

(11) **EP 4 668 817 A1**
(43) Date of publication of application: **24.12.2025**
(21) Application number: 23922677.2
(22) Date of filing: 15.02.2023
(51) Int. Cl.: H04W 12/084, H04W 12/06, H04W 12/71, H04W 12/72

(54) **APPROVAL DEVICE, COMMUNICATION SYSTEM, AND COMMUNICATION METHOD**

(71) Applicant: NTT DOCOMO, INC., Tokyo 100-6150 (JP)
(72) Inventor: MINOKUCHI, Atsushi, Tokyo 100-6150 (JP); YAMAUCHI, Kenta, Tokyo 100-6150 (JP); SAWADA, Masahiro, Tokyo 100-6150 (JP)
(74) Representative: Hoffmann Eitle
(86) International application number: PCT/JP2023/005237
(87) International publication number: WO 2024/171340

(57) **Abstract**

An authorization apparatus includes: a reception unit configured to receive a communication system use authorization request from a network node apparatus based on a registration request sent from a second terminal for which a first terminal acts as a parent; a control unit configured to, based on an identifier of the second terminal contained in the communication system use authorization request, obtain from a data storing apparatus an identifier of the first terminal and, using the identifier of the first terminal, obtain from the first terminal information indicating that consent has been obtained for the second terminal to connect to the network; and a transmission unit configured to transmit authorization information that authorizes the second terminal to use a communication system, based on the consent and on condition that the second terminal is authenticated.

## Description

### Technical Field

The present invention relates to an authorization apparatus, a communication system, and a communication method.

### Background Art

In 3GPP (registered trademark) (3rd Generation Partnership Project), in order to realize further increase in system capacities, further increase in data transmission rates, further reduction in delays in radio sections, and the like, a radio communication scheme called 5G or NR (New Radio) (hereinafter, the radio communication scheme is referred to as "5G" or "NR") has been developed. In 5G, various radio technologies have been studied in order to satisfy the requirement that the delay in the radio section be less than or equal to 1 ms while achieving a throughput greater than or equal to 10 Gps.

In NR, a network architecture including a 5GC (5G Core Network) corresponding to an EPC (Evolved Packet Core) which is a core network in an LTE (Long Term Evolution) network architecture and an NG-RAN (Next Generation-Radio Access Network) corresponding to an E-UTRAN (Evolved Universal Terrestrial Radio Access Network) which is a RAN (Radio Access Network) in the LTE network architecture is introduced (for example, Non-Patent Documents 1 and 2).

Further, for example, an architecture in which a Northbound interface between an NEF (Network Exposure Function) and an AF (Application Function) in a 5G system is configured by a CAPIF (Common Application Programming Interface) framework has been studied (for example, Non-Patent Documents 3 and 4).

### Citation List

### Non-Patent Literature

[Non-Patent Literature 1] 3GPP TS 23.501 V18.0.0 (2022-12)
[Non-Patent Literature 2] 3GPP TS 23.502 V18.0.0 (2022-12)
[Non-Patent Literature 3] 3GPP TS 33.122 V17.1.0 (2022-12)
[Non-Patent Literature 4] 3GPP TR 23.700-95 V18.0.0 (2022-12)
[Non-Patent Literature 5] 3GPP TS 24.501 V18.1.0 (2022-12)
[Non-Patent Literature 6] 3GPP TS 33.501 V18.0.0 (2022-12)

### Summary of Invention

### Solution to Problem

In 6G, which is a future communication system, it is assumed that a user of the communication system desires to easily connect a plurality of various devices purchased at an electrical appliance store, such as a VR goggle or an AR glass, to a network and use the devices. However, the conventional technique has a problem that it is difficult to appropriately connect the device to the network.

The present invention has been made in consideration of the above situation, and an object of the present invention is to provide a technique that enables a device which is not recognized by a network in advance to appropriately connect to the network.

### Means for Solving the Problem

According to the disclosed technique, there is provided an authorization apparatus including:
a reception unit configured to receive a communication system use authorization request from a network node apparatus based on a registration request sent from a second terminal for which a first terminal acts as a parent;
a control unit configured to, based on an identifier of the second terminal contained in the communication system use authorization request, obtain from a data storing apparatus an identifier of the first terminal and, using the identifier of the first terminal, obtain from the first terminal information indicating that consent has been obtained for the second terminal to connect to the network; and
a transmission unit configured to transmit authorization information that authorizes the second terminal to use a communication system, based on the consent and on condition that the second terminal is authenticated.

### Advantageous Effects of Invention

According to the disclosed technique, a technique is provided that enables a device that is not recognized by a network in advance to appropriately connect to the network.

### Brief Description of Drawings

[Fig. 1] FIG. 1 is a diagram for explaining an example of a communication system;
[Fig. 2] FIG. 2 is a diagram for explaining an example of a communication system under a roaming environment;
[Fig. 3] FIG. 3 is a diagram illustrating an example of an API call;
[Fig. 4] FIG. 4 is a diagram showing an example of a communication system according to an embodiment of the present invention;
[Fig. 5] FIG. 5 is a diagram for explaining a processing procedure in an embodiment of the present invention;
[Fig. 6] FIG. 6 is a diagram for explaining a processing procedure in an embodiment of the present invention;
[Fig. 7] FIG. 7 is a diagram for explaining a processing procedure in an embodiment of the present invention;
[Fig. 8] FIG. 8 is a diagram showing an example of a functional configuration of a network node apparatus according to an embodiment of the present invention;
[Fig. 9] FIG. 9 is a diagram showing an example of a functional configuration of a terminal according to an embodiment of the present invention;
[Fig. 10] FIG. 10 is a diagram showing an example of a hardware configuration of an apparatus according to an embodiment of the present invention;
[Fig. 11] FIG. 11 is a diagram showing an example of a configuration of a vehicle in an embodiment of the present invention. Description of Embodiments

Hereinafter, an embodiment of the present invention will be described with reference to the drawings. The embodiment described below is an example, and the embodiment to which the present invention is applied is not limited to the following embodiment.

In the operation of the radio communication system according to the embodiment of the present invention, an existing technology is used as appropriate. The existing technology is, for example, existing LTE or existing NR (5G), but is not limited to existing LTE or existing NR.

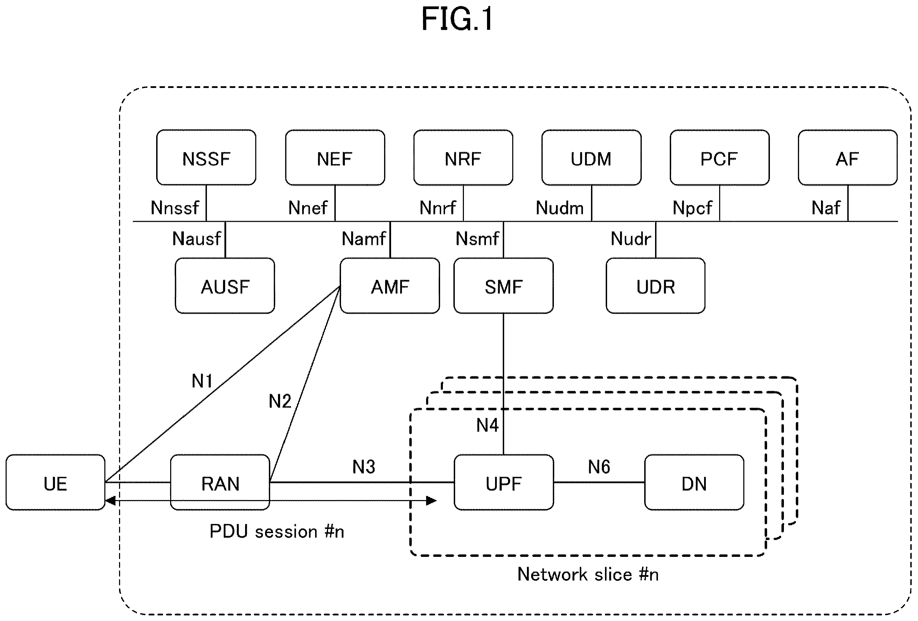

FIG. 1 is a diagram for explaining an example of a communication system. As shown in FIG. 1, the communication system includes a UE which is a terminal 20 and a plurality of network node apparatuses. Hereinafter, it is assumed that one network node apparatus corresponds to each function, but one network node apparatus may realize a plurality of functions, or a plurality of network node apparatuses may realize one function. In addition, "connection" described below may be logical connection or physical connection.

A RAN (Radio Access Network) is a network node apparatus having a radio access function, which may include the base station and is connected to a UE, an AMF (Access and Mobility Management Function), and a UPF (User plane function). The AMF is a network node apparatus 30 having functions of termination of a RAN interface, termination of a NAS (Non-Access Stratum), registration management, connection management, reachability management, mobility management, and the like. The UPF is a network node apparatus having functions such as a PDU (Protocol Data Unit) session point for externally interconnecting with a data network (DN), routing and forwarding of packets, and QoS (Quality of Service) handling of a user plane. The UPF and the DN constitute a network slice. In the radio communication network according to an embodiment of the present invention, a plurality of network slices are established.

An AMF is connected to a UE, a RAN, an SMF (Session Management function), an NSSF (Network Slice Selection Function), an NEF (Network Exposure Function), an NRF (Network Repository Function), a UDM (Unified Data Management), a UDR (Unified Data Repository), an AUSF (Authentication Server Function), a PCF (Policy Control Function), and an AF (Application Function). The AMF, the SMF, the NSSF, the NEF, the NRF, the UDM, the UDR, the AUSF, the PCF, and the AF are network node apparatuses that are interconnected via interfaces Namf, Nsmf, Nnssf, Nnef, Nnrf, Nudm, Nudr, Nausf, Npcf, and Naf based on their respective services.

The SMF is a network node apparatus 30 having functions such as session management, IP (Internet Protocol) address assignment and management for a UE, a DHCP (Dynamic Host Configuration Protocol) function, an ARP (Address Resolution Protocol) proxy, a roaming function, and the like. The NEF is a network node apparatus 30 having a function of notifying other NFs (Network Functions) of capabilities and events. The NSSF is a network node apparatus 30 having functions of selecting a network slice to which the UE is connected, determining an allowed NSSAI (Network Slice Selection Assistance Information), determining an NSSAI to be set, determining an AMF set to which the UE is connected, and the like. The PCF is a network node apparatus having a function of performing policy control of the network. The AF is a network node apparatus having a function of controlling the application server. The NRF is a network node apparatus having a function of discovering an NF instance that provides a service. The UDM is a network node apparatus 30 that manages subscriber data and authentication data. The UDM also stores (manages) dynamic information that reflects the connection status and the like of the terminal 20. The UDM is connected to a UDR (User Data Repository) that stores the data.

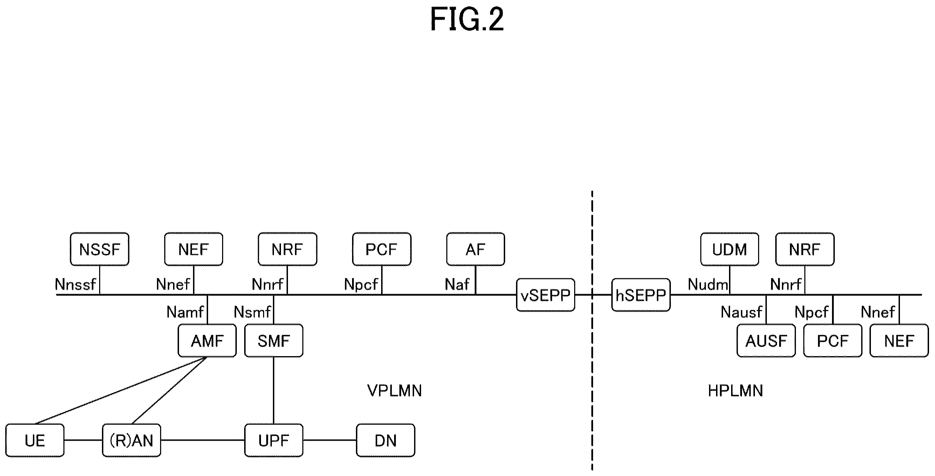

FIG. 2 is a diagram for explaining an example of a communication system in a roaming environment. As shown in FIG. 2, the network is configured by a UE which is the terminal 20 and a plurality of network node apparatuses. The SEPP is a non-transparent proxy that filters control plane messages between Public Land Mobile Networks (PLMNs). The vSEPP shown in FIG. 2 is the SEPP in the visited network, and the hSEPP is the SEPP in the home network.

As shown in FIG. 2, the UE is in a roaming environment connected to the RAN and the AMF in a Visited PLMN (VPLMN). The VPLMN and the HPLMN (Home PLMN) are connected via vSEPP and hSEPP. The UE may communicate with the UDM of the HPLMN via the AMF of the VPLMN, for example.

The operation in the present embodiment may be performed by either of the configurations shown in FIGs. 1 and 2. The operation of the present embodiment may be performed in a configuration other than the configurations shown in FIGs. 1 and 2. That is, the authorization apparatus 40 and the like, which will be described later, are assumed to be network node apparatuses in 5GS, but the present invention is not limited to this assumption, and the authorization apparatus 40 and the like may be apparatuses in a communication system other than 5GS.

In the NEF described above, an API (Application Programming Interface) that can be called from an AF can be implemented by applying a CAPIF (Common API Framework) architecture. The CAPIF architecture provides a mechanism for supporting service API operation, for example, allowing an API calling source (invoker) to discover a service API provided by an API provider and to perform communication using the service API.

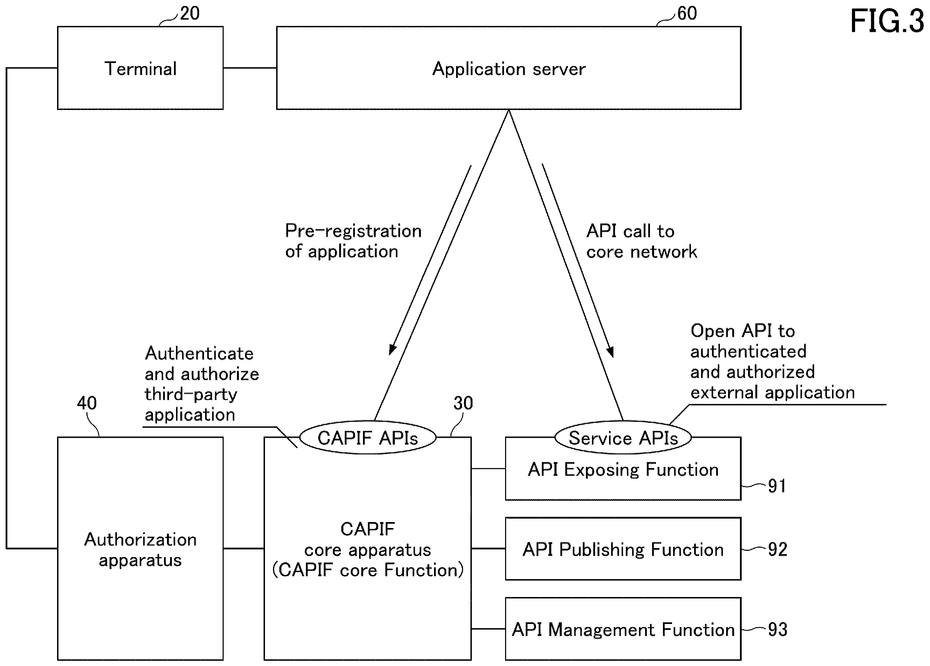

FIG. 3 is a diagram illustrating an example of an API call. In the core network of 3GPP (Registered trademark), APIs are opened for external applications, and the APIs can be called from the application server 60 of the third party to a network node apparatus.

As illustrated in FIG. 3, an application of an API-calling source is registered in advance in the CAPIF core apparatus 30 from the application server 60 by using the CAPIF-API. The CAPIF core apparatus 30 authenticates and authorizes the application. As illustrated in FIG. 3, a service API is opened for an authenticated and authorized application by an API exposing function (also referred to as an AEF) 91, and the application of the API-calling source can use a function of the API by calling the API.

The APF (API Publishing Function) 92 has a function of publishing service API information of an API provider to the CAPIF core apparatus 30. The AMF (API Management Function) 91 has various management functions related to API calls.

In addition, by extending the CAPIF, the terminal 20 can authorize the application server 60 to call an API via the authorization apparatus 40. For example, the mechanism of OAuth2.0 can be used to realize authorization.

In the following description, unless otherwise specified, a "user" is a subject (typically, a person) who uses a terminal, and a "terminal" is a device such as a smartphone. However, the "terminal" may be referred to as a "user".

### (About the Problem)

As described above, in 6G, which is a future communication system, it is assumed that a user of the communication system desires to easily connect a plurality of various devices (referred to as "bring-your-own devices") purchased at an electrical appliance store, such as VR goggles or AR glasses, to a network and use the devices.

At this time, it is troublesome to make a subscriber contract for each device in order to allow the device to connect to the network. In addition, in a case where the device is connected to a network by tethering via a normal smartphone of a user, the smartphone may become a bottleneck such as limiting a communication speed. That is, in the conventional technique, there is a problem that it is difficult to appropriately connect the bring-your-own device to the network. Hereinafter, a technique for solving such a problem will be described.

### (System Configuration Example)

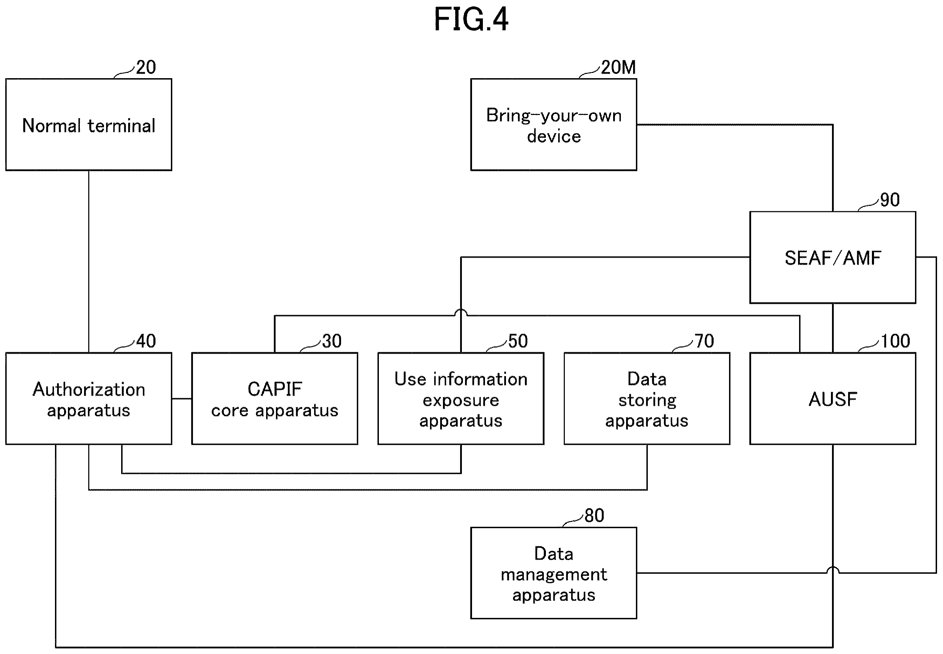

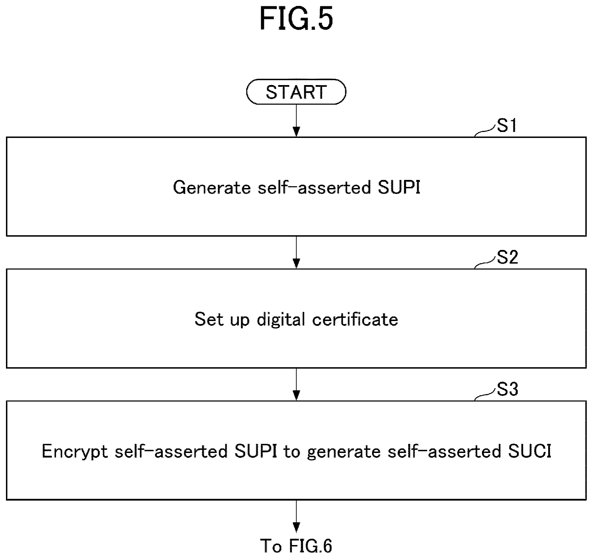

FIG. 4 shows an example of the configuration of a communication system according to the present embodiment. As shown in FIG. 5, the communication system according to the present embodiment includes a normal terminal 20, a bring-your-own device 20M, a SEAF/AMF 90, an AUSF 100, an authorizing apparatus 40, a CAPIF core apparatus 30, a user information exposure apparatus 50, a data storing apparatus 70, and a data management apparatus 80. Data communication is possible via the communication network at least in the sections connected by the lines shown in FIG. 5. The functions and operations of the respective apparatuses will be described later. The normal terminal 20 may be referred to as a first terminal, and the bring-your-own device 20M may be referred to as a second terminal.

In the present embodiment, the data storing apparatus 70 and the data management apparatus 80 correspond to a UDR and a UDM, respectively.

In the present embodiment, since it is assumed that the AMF 90 has a SEAF (SEcurity Anchor Function), the "SEAF/AMF 90" is used. The SEAF function is an authenticating function in the AMF 90, holds an anchor key or the like specific to a serving network, and is used in a procedure for authenticating a terminal.

### <OIDC and OIDC CIBA>

In the communication system according to the present embodiment, OIDC is introduced. Specifically, the authorization endpoint function of the OIDC (OpenID (registered trademark) Connect) OP (OpenID (registered trademark) Provider) and the token endpoint function of the OIDC OP are incorporated into the authorization apparatus 40 and the CAPIF core apparatus 30, respectively. In addition, the user information exposure apparatus 50 provides the user information endpoint function of the OIDC OP.

In addition, in a part of the processing procedure in the present embodiment, a procedure defined in the technical specification of OIDC CIBA is used. The technical specification is assumed to be "OpenID Connect Client-Initiated Backchannel Authentication Flow-Core 1.0 specification".

In OIDC CIBA, two types of devices are defined: Consumption Device and Authentication Device.

Below is an example of a typical procedure using CIBA. Suppose a child tries to buy something on an e-commerce site from their own PC (the "consumption device" ). A consent request is push-notified to the parent's smartphone (the "authentication device" ). When the parent authenticates and grants authorization on the smartphone, thereby approving the child's purchase, the child can complete the transaction.

In the present embodiment, the bring-your-own device 20M corresponds to the consumption device, and the normal terminal 20 correspond to the authentication apparatus.

]

### (Overview of Embodiment)

In the present embodiment, the registration procedure is expanded as follows, so that the bring-your-own device 20M, which is a device having an electronic certificate not registered in the network, can be registered in the network. If the bring-your-own device 20M can be registered in the network, the bring-your-own device 20M can be connected to the network and can communicate without separately making a subscriber contract for the bring-your-own device 20M and without performing tethering. Therefore, the above-described problem is solved.

### <Authentication>

During EAP-TLS authentication, the network employs the OIDC CIBA procedure, via the parent normal terminal 20, to authenticate the user who will bear the network-access charges for the bring-your-own device and obtain that user's consent for connecting the bring-your-own device 20M to the network.

### <Subscriber Information>

From the information (e.g., ID data) that the user pre-configures in the data storing apparatus 70 or the user information exposure apparatus 50, together with the subscriber information of the normal terminal 20 that acts as the parent of the bring-your-own device 20M, the system generates subscriber-information-equivalent data for that bring-your-own device 20M (i.e., data corresponding to subscriber information). For example, the AMF 90 creates this subscriber-information-equivalent data for the bring-your-own device 20M by concatenating the above ID information with the subscriber information of the normal terminal 20.

### (Registration Procedure Example)

Hereinafter, an example of a registration procedure executed in the communication system according to the present embodiment will be described with reference to FIGs. 5 to 7. The procedure of the present embodiment partially utilizes the message/procedure of the existing technical specification. The name of the existing technical specification is shown in parentheses.

### <S1>

In S1 (step 1) of FIG. 5, the user concatenates an arbitrary identifier (e.g., "private 1") representing the bring-your-own device 20M to an arbitrary identifier (e.g., mail address) representing the user, and determines the concatenated identifier (e.g., mail address + "private 1") as a global identifier of the bring-your-own device 20M. Hereinafter, this is referred to as a self-asserted SUPI (Subscription Permanent Identifier). The "self-asserted" means that the identifier is determined by the user themselves (self-asserted), and implies the presence of the normal terminal 20 serving as a parent.

That is, in S1, "arbitrary identifiers representing bring-your-own devices in a user" are introduced in consideration of a case in which the same user has a plurality of bring-your-own devices.

### <S2>

In S2, the user sets an electronic certificate in the bring-your-own device 20M having the self-asserted SUPI.

### <S3>

The bring-your-own device 20M encrypts the self-asserted SUPI using the public keys of the network (communication system). The encrypted self-asserted SUPI is called a self-asserted SUCI (Subscription Concealed Identifier).

### <S4>

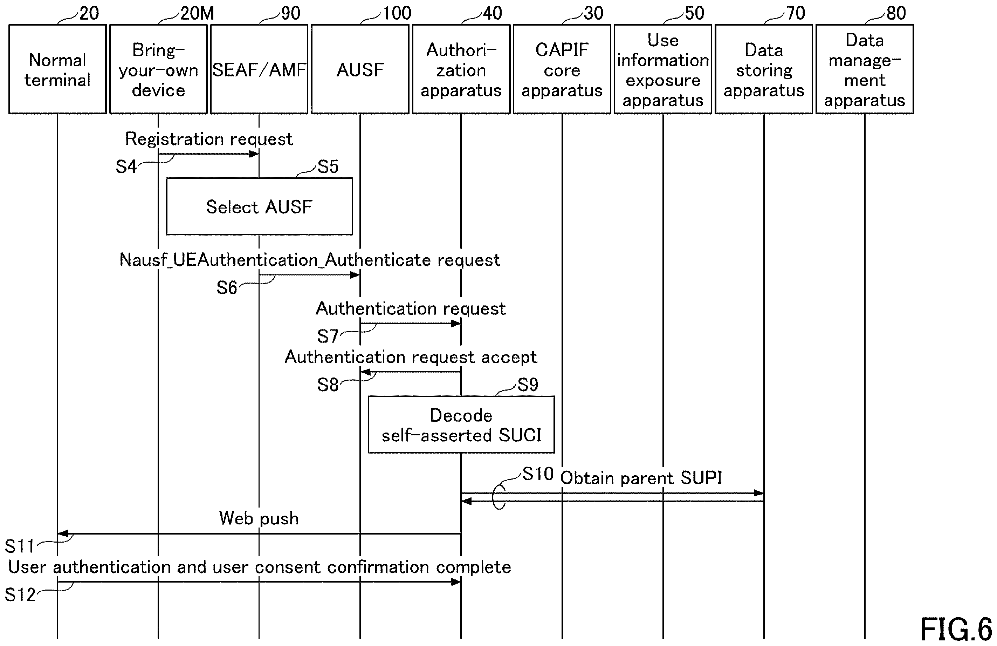

Next, a description will be provided with reference to FIG. 6. In S4, the bring-your-own device 20M transmits a registration request to the SEAF/AMF 90 (TS 33.501, B.2.1.1, step1) (TS 23.502, 4.2.2.2.4, step1). When transmitting the registration request message, the bring-your-own device 20M includes the self-asserted SUCI in the message, and sets 5GS registration type (TS 24.501, 9.11.3.7)="bring-your-own device onboarding registration". The "bring-your-own device onboarding registration" is an example of information indicating that the bring-your-own device 20M is registered in the network. Any information may be used for the 5GS Registration Type, as long as the information indicates that bring-your-own device 20M is caused to be registered in the network.

### <S5>

In S5, the SEAF/AMF 90 confirms the 5GS registration type ="bring-your-own device onboarding registration" included in the received registration request, then, the SEAF/AMF 90 selects an AUSF 100 that can handle the bring-your-own device 20M.

### <S6>

In S6, the SEAF/AMF 90 transmits a Nausf_UEAuthentication_Authenticate request to the AUSF 100 (TS33.501, B.2.1.1, step2). The message includes an AuthenticationInfo IE (TS 29.509, 6.1.6.2.2). The IE includes the self-asserted SUCI and the bring-your-own device onboarding identifier. The Nausf_UEAuthentication_Authenticate request may be referred to as an authentication request.

The "bring-your-own device onboarding identifier" is an identifier indicating that the message is for registering the bring-your-own device 20M in the network. This identifier allows determination that a procedure using OIDC CIBA is required.

### <S7>

In S7, the AUSF 100 confirms the bring-your-own device onboarding identifier and transmits an authentication request (OIDC CIBA, Chapter 7.1) to the authorizing apparatus 40 (OIDC CIBA, Chapter 5 Poll Mode, step1). The authentication request may be referred to as a communication system use authorization request. The authentication request message includes login_hint. The login_hint has the self-asserted SUCI as a value.

The authorization apparatus 40 has a function of an authorization termination point in OIDC and also has a function of a backchannel authentication termination point in OIDC CIBA. The AUSF 100 also acts as a client in OIDC CIBA.

### <S8>

In S8, the authorization apparatus 40 transmits an authentication request accept (OIDC CIBA, Chapter 7.3) to the AUSF 100 (OIDC CIBA, Chapter 5 Poll mode, step1). The authentication request accept message includes auth_req_id. The auth_req_id corresponds to a reception number created to identify a request.

### <S9>

The authorization apparatus 40 includes a function of a subscriber identity de-concealing function (SIDF) (TS 33.501, 5.8.2). In S9, the authorization apparatus 40 decrypts the self-asserted SUCI using the function to obtain the self-asserted SUPI.

### <S10>

In S10, the authorization apparatus 40 uses the identifier (e.g., email addresses) representing the user in the self-asserted SUPI to query the data storing apparatus 70 behind the user information exposure apparatus 50 to obtain the corresponding user and a SUPI (referred to as a parent SUPI) of the contract of the user.

### <S11>

In S11, the authorization apparatus 40 transmits a message for authenticating the user and confirming consent on the network connection of the bring-your-own device 20M represented by the self-asserted SUCI to the normal terminal 20 corresponding to the parent SUPI by Web push using the parent SUPI (OIDC CIBA, Chapter 5, Poll mode, step2). The consent confirmation may be referred to as "authorization".

### <S12>

In S12, the normal terminal 20 notifies the authorization apparatus 40 that user authentication and confirmation of user consent have been completed (OIDC CIBA, Chapter 5, Poll mode, step 2). The notification includes information indicating that consent has been obtained for the bring-your-own device 20M to connect to the network.

### <S13>

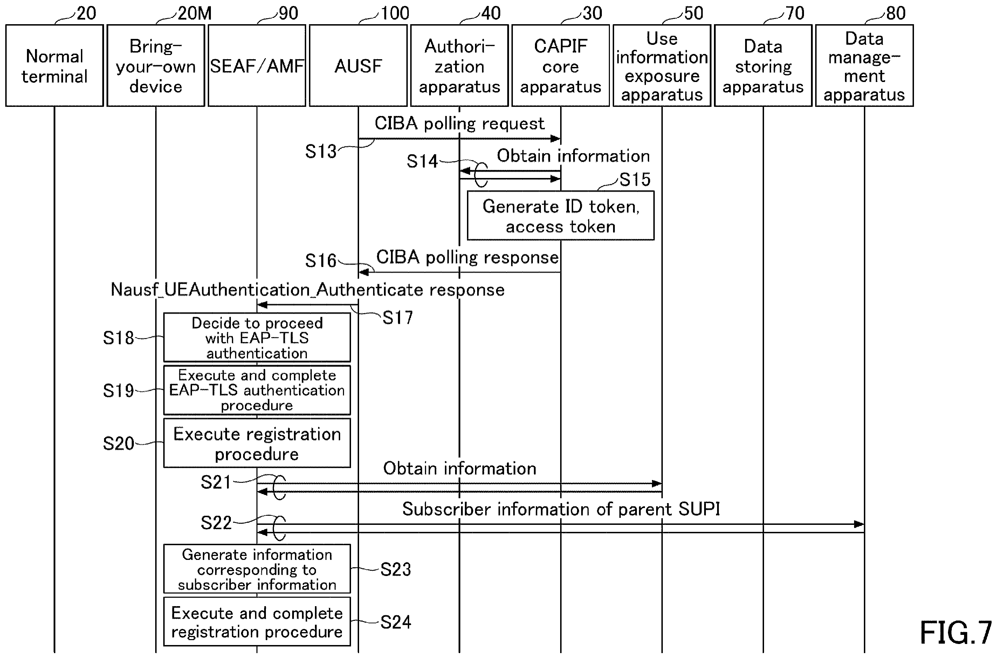

In S13 of FIG. 7, the AUSF 100 transmits a CIBA polling request to the CAPIF core apparatus 30 (OIDC CIBA, Chapter 5 Poll Mode, step3a). The message includes auth_req_id obtained in S8. The CAPIF core apparatus 30 has a function of a token termination point in OIDC and also has a function of a token termination point in OIDC CIBA.

### <S14>

In S14, the CAPIF core apparatus 30 uses auth_req_id to access the authorization apparatus 40 and obtains from it the self-asserted SUPI, the parent SUPI, the authentication execution time, and the authentication method. In other words, the authorization apparatus 40 transmits the self-asserted SUPI, the parent SUPI, the authentication execution time, and the authentication method to the CAPIF core apparatus 30. The information that the CAPIF core apparatus 30 acquires from the authorization apparatus 40 (information transmitted by the authorization apparatus 40) serves as an example of information indicating that the normal terminal 20 has given the consent (authorization) required to register (connect) the bring-your-own device 20M to the network. Moreover, based on that consent and on the premise that the bring-your-own device 20M will be authenticated, the information that the CAPIF core apparatus 30 acquires from the authorization apparatus 40 (information transmitted by the authorization apparatus 40) functions as authorization information permitting the bring-your-own device 20M to use the communication system.

### <S15>

In S15, the CAPIF core apparatus 30 generates an ID token and an access token based on information obtained from the authorization apparatus 40.

### <S16>

In S16, the CAPIF core apparatus 30 transmits a CIBA polling response to the AUSF 100 (OIDC CIBA, Chapter 5 Poll Mode, step3b). The message includes the ID token, the access token, the self-asserted SUPI, the parent SUPI, and an EAP-TLS identifier.

### <S17>

In S17, the AUSF 100 decides to perform EAP-TLS authentication on the self-asserted SUPI and transmits a
Nausf_UEAuthentication_Authenticate response to the SEAF/AMF 90 (TS 33.501, B.2.1.1, step6). The message includes the ID token, the access token, the self-asserted SUPI, and the parent SUPI.

### <S18>

In S18, the SEAF/AMF 90 decides to proceed with EAP-TLS authentication of the bring-your-own device 20M, having obtained the ID token.

### <S19>

In S19, the SEAF/AMF 90 continues and completes the EAP-TLS authentication procedure for the bring-your-own device 20M (TS 33.501, B.2.1.1, step7-21).

### <S20>

In S20, the SEAF/AMF 90 continues the registration procedure for the bring-your-own device 20M (TS 23.502, 4.2.2.2.2, step10 onward) .

### <S21>

The SEAF/AMF 90 does not obtain the subscriber information of the self-asserted SUPI from the data management apparatus 80 (TS 23.502, 4.2.2.2.2, step14b). Instead, in S21, the SEAF/AMF 90 accesses the user information exposure apparatus 50 by using the access token, and obtains information used for generating subscriber-information-equivalent data of the self-asserted SUPI.

### <S22>

In S22, the SEAF/AMF 90 obtains the subscriber information of the parent SUPI from the data management apparatus 80.

### <S23>

In S23, the SEAF/AMF 90 generates subscriber-information-equivalent data of the bring-your-own device 20M (self-asserted SUPI) based on the information obtained in S21 and S22.

### <S24>

In S24, the SEAF/AMF 90 continues and completes the registration procedure for the bring-your-own device 20M (TS 23.502, 4.2.2.2.2, step21).

### (Other Examples)

Although the above example shows an example of the registration procedure for one bring-your-own device 20M, the registration procedure for a plurality of bring-your-own devices having the normal terminal 20 as a parent can be performed in the same manner. For example, in each of the above-described procedures, instead of generating/transmitting/receiving information on one bring-your-own device 20M, by collectively generating/transmitting/receiving information on a plurality of bring-your-own devices, a registration procedure for a plurality of bring-your-own devices can be realized

In the above configuration/procedure, the function of the authorization apparatus 40 may be included in the AUSF 100. In this case, the procedure between the AUSF 100 and the authorization apparatus 40 shown in FIGS. 6 and 7 is a procedure inside the AUSF 100.

### (Apparatus Configuration)

Next, functional configuration examples of the network node apparatus 300 and the terminals 20 (the normal terminal 20, the bring-your-own device 20M, and the like) that perform the processes and operations described above will be described. The network node apparatuses 300 are each apparatus other than the UE in FIG. 1 and each apparatus other than the normal terminal 20 and the bring-your-own device 20M in FIG. 4.

### <Network node apparatus 300>

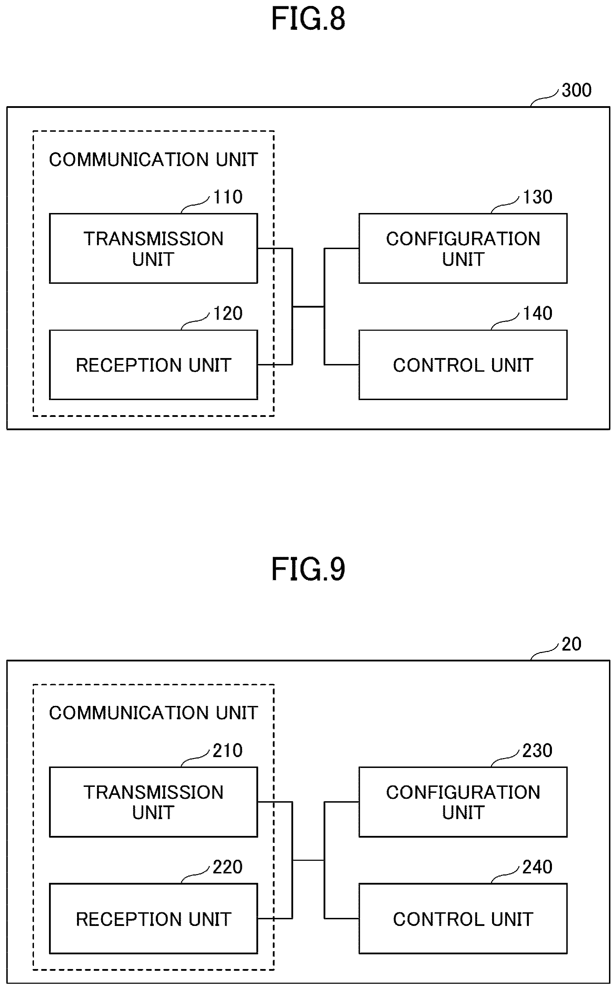

FIG. 8 is a diagram illustrating an example of a functional configuration of the network node apparatus 300. As illustrated in FIG. 8, the network node apparatus 300 includes a transmission unit 110, a reception unit 120, a configuration unit 130, and a control unit 140. The functional configuration illustrated in FIG. 8 is merely an example. As long as the operation according to the embodiment of the present invention can be performed, the functional division and the name of the functional unit may be any.

The transmission unit 110 includes a function of generating information to be transmitted to the terminal 20 or another network node apparatus and transmitting the information in a wired or wireless manner. The reception unit 120 receives various types of information transmitted from the terminal 20 or another network node apparatus.

The configuration unit 130 stores various types of configuration information in a storage device, and reads the configuration information from the storage device as necessary.

The control unit 140 controls the entire apparatus. The functional unit related to information transmission in the control unit 140 may be included in the transmission unit 110, and the functional unit related to information reception in the control unit 140 may be included in the reception unit 120. The transmission unit 110 may be referred to as a transmitter, and the reception unit 120 may be referred to as a receiver.

### <Terminal 20>

FIG. 9 is a diagram illustrating an example of a functional configuration of the terminal 20. As illustrated in FIG. 9, the terminal 20 includes a transmission unit 210, a reception unit 220, a configuration unit 230, and a control unit 240. The functional configuration illustrated in FIG. 9 is merely an example. The functional division and the name of the functional unit may be any division and name as long as the operation according to the embodiment of the present invention can be executed. The transmission unit 210 and the reception unit 220 may be collectively referred to as a communication unit.

The transmission unit 210 generates a transmission signal from transmission data and wirelessly transmits the transmission signal. The reception unit 220 wirelessly receives various signals and acquires a signal of a higher layer from the received signal of the physical layer. The reception unit 220 has a function of receiving an NR-PSS, an NR-SSS, an NR-PBCH, a DL/UL/SL control signal, a DCI by a PDCCH, data by a PDSCH, and the like transmitted from the base station 10.

The configuration unit 230 stores various types of configuration information received from the base station 10 or another terminal by the reception unit 220 in a storage device included in the configuration unit 230, and reads the configuration information from the storage device as necessary. The configuration unit 230 also stores configuration information that is configured in advance.

The control unit 240 controls the terminal 20. The functional unit related to signal transmission in the control unit 240 may be included in the transmission unit 210, and the functional unit related to signal reception in the control unit 240 may be included in the reception unit 220. The transmission unit 210 may be referred to as a transmitter, and the reception unit 220 may be referred to as a receiver.

According to the present embodiment, at least the following supplementary note is disclosed.

### <Supplementary Note>

### [Clause 1]

An authorization apparatus including:
a reception unit configured to receive a communication system use authorization request from a network node apparatus based on a registration request sent from a second terminal for which a first terminal acts as a parent;
a control unit configured to, based on an identifier of the second terminal contained in the communication system use authorization request, obtain from a data storing apparatus an identifier of the first terminal and, using the identifier of the first terminal, obtain from the first terminal information indicating that consent has been obtained for the second terminal to connect to the network; and
a transmission unit configured to transmit authorization information that authorizes the second terminal to use a communication system, based on the consent and on condition that the second terminal is authenticated.

### [Clause 2]

The authorization apparatus as described in Clause 1,
wherein the identifier of the second terminal includes an identifier representing a user, and
wherein the control unit obtains the identifier of the first terminal from the data storing apparatus using the identifier representing the user.

### [Clause 3]

The authorization apparatus as described in Clause 2,
wherein the identifier of the second terminal includes the identifier representing the user and an identifier, within the user, for identifying the second terminal.

### [Clause 4]

A communication system including: the authorization apparatus as described in Clause 1 and an access and mobility management apparatus,
the access and mobility management apparatus including a control unit configured to execute an authentication procedure for the second terminal based on an ID token generated based on the authorization information.

### [Clause 5]

The communication system as described in Clause 4,
wherein the control unit of the access and mobility management apparatus generates information corresponding to subscriber information of the second terminal, using subscriber information of the first terminal and information pre-configured in a user information exposure apparatus.

### [Clause 6]

A communication method executed by an authorization apparatus, the communication method including:
receiving a communication system use authorization request from a network node apparatus based on a registration request sent from a second terminal for which a first terminal acts as a parent;
based on an identifier of the second terminal contained in the communication system use authorization request, obtaining from a data storing apparatus an identifier of the first terminal and, by using the identifier of the first terminal, obtaining from the first terminal information indicating that consent has been obtained for the second terminal to connect to the network; and
transmitting authorization information that authorizes the second terminal to use a communication system, based on the consent and on condition that the second terminal is authenticated.

According to any of Clauses 1 to 6, a technique is provided that enables a device that is not recognized in advance by a network to be appropriately connected to the network. According to Clause 2, a desired identifier can be acquired from the data storing apparatus. According to Clause 3, it is possible to generate an identifier of the second terminal that can be identified within a user. According to Clause 5, information corresponding to the subscriber information of the second terminal can be generated.

### (Hardware Configuration)

The block diagrams (FIGS. 8 and 9) used in the description of the embodiment described above illustrate the block of functional units. Such functional blocks (configuration parts) are attained by at least one arbitrary combination of hardware and software. In addition, an attainment method of each of the functional blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

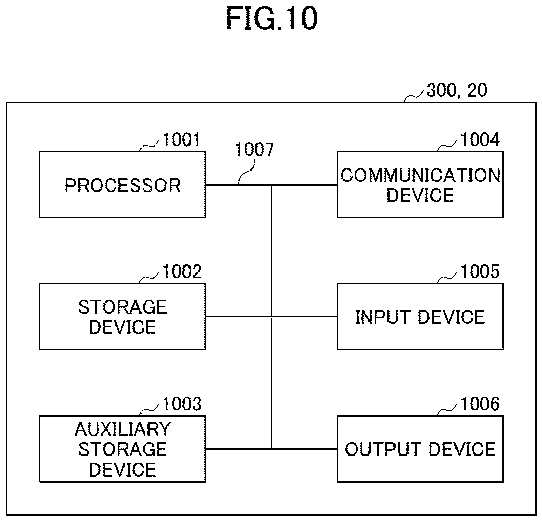

For example, the network node apparatus 300, and the terminal 20 and the like in one embodiment of this disclosure may function as a computer for performing the processing of a radio communication method of this disclosure. FIG. 10 is a diagram illustrating an example of a hardware configuration of the network node apparatus 300 and the terminal 20 and the like according to one embodiment of this disclosure. The network node apparatus 300 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the network node apparatus 300 and the terminal 20 and the like may be configured to include one or a plurality of apparatuses illustrated in the drawings, or may be configured not to include a part of the apparatuses.

Each function of the network node apparatus 300 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 may be attained by a control program that is stored in the storage device 1002 and is operated by the processor 1001. Also, for example, the control unit 240 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wired network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the network node apparatus 300 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

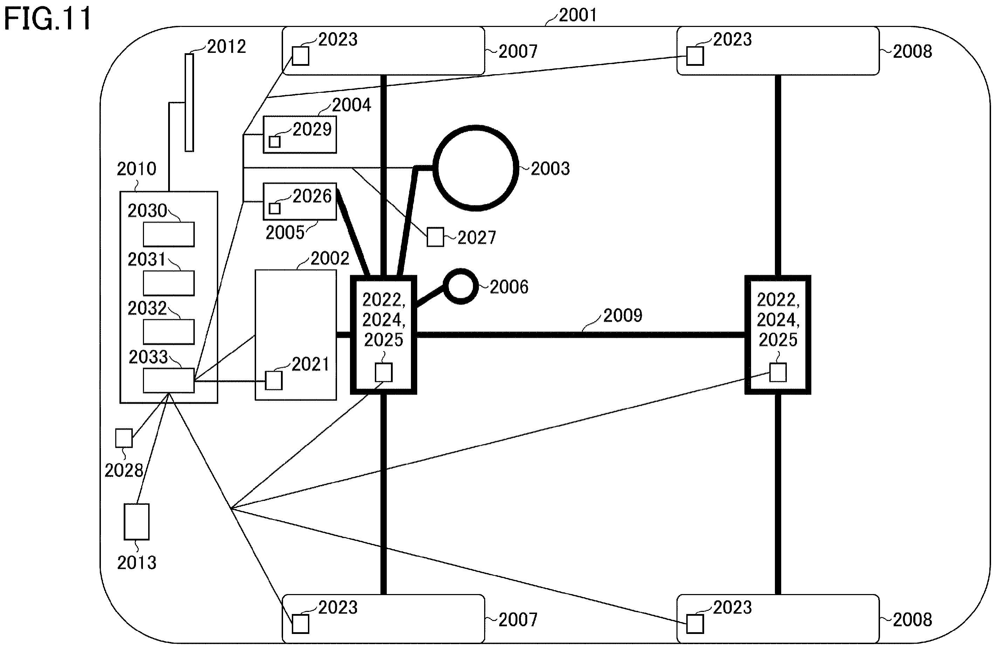

The network node apparatus 300 or the terminal 20 may be provided in a vehicle 2001. FIG. 11 shows a configuration example of a vehicle 2001 according to the present embodiment. As shown in FIG. 11, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. The network node apparatus 300 or the terminal 20 of the aspect/embodiment described in the present disclosure may be applied to a communication apparatus mounted on the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, etc.) that receives input from external sources and may also include an output device (for example, a display, a speaker, an LED lamp, a touch panel, etc.) that provides output to external destinations.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of, signals from the various sensors 2021 to 2028 described above input to the electronic control unit 2010, information obtained based on the signals, and information based on input from the outside (user) obtained via the information service unit 2012 to an external device via radio communication. The electronic control unit 2010, the various sensors 2021 to 2028, the information service unit 2012, and the like may be referred to as an input unit that receives an input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to a device such as a display or a speaker based on the PDSCH (or data/information decoded from the PDSCH) received by the communication module 2013). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the network node apparatus 300 and the terminal 20 have been described by using a functional block diagram, but such an apparatus may be attained by hardware, software, or a combination thereof. Each of software that is operated by a processor of the base station 10 and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiment described in this disclosure may be applied to a system using long term evolution (LTE), LTE-advanced (LTE-A), SUPER 3G, IMT-advanced, a 4th generation mobile communication system (4G), a 5th generation mobile communication system (5G), 6th generation mobile communication system (6G),xth generation mobile communication system (xG) (xG, where x is, for example, an integer or a decimal), FRA (Future Radio Access),NR (New Radio), New Radio Access (NX), Future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded, modified, generated, or specified on the basis thereof. In addition, a combination of a plurality of systems (for example, a combination of at least 5G and one of LTE and LTE-A, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), and at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In the present disclosure, the transmission of information from the base station to the terminal may be read as the base station instructing the terminal to perform control and operation based on the information.

In the present disclosure, the terms "Mobile Station (MS)", "user terminal", "User Equipment (UE)", "terminal", and the like may be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object is a movable object, and the moving speed is arbitrary. The moving object may be stopped. Examples of the moving object include, but are not limited to, vehicles, transportation vehicles, automobiles, motorcycles, bicycles, connected cars, excavators, bulldozers, wheel loaders, dump trucks, forklifts, trains, buses, rear cars, rickshaws, ships and other watercraft, airplanes, rockets, artificial satellites, drones, multicopters, quadcopters, balloons, and objects mounted thereon. Moreover, the mobile object may be an autonomous mobile object that operates based on operation commands. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the user terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first", "second", and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or that the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be an exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe. Also, one slot may be referred to as a unit time. The unit time may be different for each cell according to the numerology.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In the terminal 20, one or a plurality of BWPs may be configured within one carrier.

At least one of the configured BWPs may be active, and it need not be assumed that the terminal 20 transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as "a", "an", and "the" are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

20 normal terminal
20M bring-your-own device
30 CAPIF core apparatus
40 authorization apparatus
90 SEAF/AMF
50 user information exposure apparatus
100 AUSF
70 data storing apparatus
80 data management apparatus
110 transmission unit
120 reception unit
130 configuration unit
140 control unit
210 transmission unit
220 reception unit
230 configuration unit
240 control unit
300 network node apparatus
1001 processor
1002 storage device
1003 auxiliary storage device
1004 communication device
1005 input device
1006 output device
2001 vehicle
2002 drive unit
2003 steering unit
2004 accelerator pedal
2005 brake pedal
2006 shift lever
2007 front wheels
2008 rear wheels
2009 axle
2010 electronic control unit
2012 information service unit
2013 communication module
2021 current sensor
2022 revolution sensor
2023 pneumatic sensor
2024 vehicle speed sensor
2025 acceleration sensor
2026 brake pedal sensor
2027 shift lever sensor
2028 object detection sensor
2029 accelerator pedal sensor
2030 driving support system unit
2031 microprocessor
2032 memory (ROM, RAM)
2033 communication port (IO port)

## Claims

1. An authorization apparatus comprising:
a reception unit configured to receive a communication system use authorization request from a network node apparatus based on a registration request sent from a second terminal for which a first terminal acts as a parent;
a control unit configured to, based on an identifier of the second terminal contained in the communication system use authorization request, obtain from a data storing apparatus an identifier of the first terminal and, using the identifier of the first terminal, obtain from the first terminal information indicating that consent has been obtained for the second terminal to connect to the network; and
a transmission unit configured to transmit authorization information that authorizes the second terminal to use a communication system, based on the consent and on condition that the second terminal is authenticated.

2. The authorization apparatus as claimed in claim 1,
wherein the identifier of the second terminal includes an identifier representing a user, and
wherein the control unit obtains the identifier of the first terminal from the data storing apparatus using the identifier representing the user.

3. The authorization apparatus as claimed in claim 2,
wherein the identifier of the second terminal includes the identifier representing the user and an identifier, in the user, for identifying the second terminal.

4. A communication system comprising: the authorization apparatus as claimed in claim 1 and an access and mobility management apparatus,
the access and mobility management apparatus comprising a control unit configured to execute an authentication procedure for the second terminal based on an ID token generated based on the authorization information.

5. The communication system as claimed in claim 4,
wherein the control unit of the access and mobility management apparatus generates information corresponding to subscriber information of the second terminal, using subscriber information of the first terminal and information pre-configured in a user information exposure apparatus.

6. A communication method executed by an authorization apparatus, the communication method comprising:
receiving a communication system use authorization request from a network node apparatus based on a registration request sent from a second terminal for which a first terminal acts as a parent;
based on an identifier of the second terminal contained in the communication system use authorization request, obtaining from a data storing apparatus an identifier of the first terminal and, by using the identifier of the first terminal, obtaining from the first terminal information indicating that consent has been obtained for the second terminal to connect to the network; and
transmitting authorization information that authorizes the second terminal to use a communication system, based on the consent and on condition that the second terminal is authenticated.
